# EUROPEAN PATENT SPECIFICATION

(11) **EP 1 461 532 B1**
(45) Date of publication and mention of the grant of the patent: **07.03.2007**
(21) Application number: 02791876.2
(22) Date of filing: 30.12.2002
(51) Int. Cl.: F04B 39/00, C09K 3/10

(54) **SELF-LUBRICATING PLASTICS MATERIAL FOR SEALING ELEMENTS**
SELBSTSCHMIERENDE KUNSTSTOFFMATERIALIEN FÜR ABDICHTELEMENTE
MATIERE PLASTIQUE AUTOLUBRIFIANTE POUR ELEMENTS D'ETANCHEITE

(30) Priority: 28.12.2001 IT MI20012824
(43) Date of publication of application: 29.09.2004
(73) Proprietor: Nuovo Pignone Holding S.P.A., 50127 Florence (IT)
(72) Inventor: GHASRIPOOR, Farshad, Scotia, NY 12302 (US); AKSIT, Mahmut Faruk, Istanbul 81070 (TR); GRAZIANI, Franco, I-50136 Florence (IT); MORGANTI, Piero, I-59100 Prato (IT); CALABRESE, Salvatore, Clifton Park, NY 12065 (US)
(74) Representative: Pedder, James Cuthbert
(86) International application number: PCT/EP2002/014850
(87) International publication number: WO 2003/056176

(56) References cited:
- EP-A- 0 276 084
- EP-A- 1 046 816
- GB-A- 2 013 793
- US-A- 3 950 047
- US-A- 5 112 541
- US-A- 6 073 538

## Description

The present invention relates to a self-lubricating plastics material for sealing elements.

In particular, the present invention relates to a plastics material with self-lubricating action which is in particular suitable for the production of sealing elements for reciprocating compressors.

As is known, reciprocating compressors are equipped with a piston which is moved axially within a cylinder in order to compress a gas. Generally, the piston of reciprocating compressors is equipped with annular sealing elements arranged coaxially relative to the axis of the piston and the cylinder and accommodated in a seat formed in the side wall of the piston itself.

It is furthermore known that the piston sealing elements or rings are subject to wear as they slide along the cylindrical cavity.

With the aim of limiting this wear, efforts are made to minimise friction between the sliding surfaces by making use of lubricants in liquid or powder form.

Despite the sliding occurs in the presence of lubricants, wear impairs the integrity of the sealing element over time, such that, after an initial period of service, the compressor is no longer capable of achieving the highest pressures.

This disadvantage is a particularly serious problem for compressors with high operating pressures in which the sealing ring is required to maintain, when in motion, an elevated pressure differential.

In order to minimise wear between components which are in contact during sliding, use has been made of new wear-resistant materials in the manufacture of sealing elements.

Among non-metallic materials, one typical material currently used for producing sealing elements is tetrafluoroethylene or plastics blends which contain it.

Said resin, which is abbreviated as PTFE, is widely used due to its low modulus of elasticity, ease of handling, sealing properties and low coefficient of dynamic friction.

It has, however, been found that sealing elements made from PTFE resin, especially sealing rings for reciprocating pistons, have a tendency to undergo permanent deformation if subjected to stress for extended periods. In particular, under operating conditions of elevated pressure and temperature, PTFE sealing rings not only degrade prematurely, but are also subject to permanent deformation along the dividing line to an extent such as to impair their sealing properties.

Moreover, since the temperature of the sliding surfaces in inadequately lubricated reciprocating compressors may rise to values in excess of 100°C, said PTFE sealing elements are often subject to extrusion when subjected to elevated pressure loads. Especially when the coupling members which, during sliding, must come into contact with the sealing elements are made from steel with low thermal conductivity, the temperature of the sliding surfaces tends to rise excessively due to the build-up of heat in the steel, even if the lubricant transmits heat adequately to the coupling member.

When coupling members are made from aluminium alloy equipped with an anticorrosion lining, heat is not transmitted due to the reduced surface roughness. Under these conditions, structural damage may occur, not only to the cylinder lining but even to the aluminium substrate.

Under certain service conditions, using PTFE in the production of sealing elements may thus prove somewhat unsatisfactory since it requires reinforcement with other fibres, additives and fillers, the addition of which is, however, also not without disadvantages.

At present, in addition to PTFE, other non-metal-based materials with a low coefficient of friction, such as PEEK and PBS, are thus used to produce sealing elements.

In particular, PEEK is a highly wear-resistant material, even in applications with elevated operating loads and elevated pressures.

However, it has been found that using PEEK as the sole constituent of the sealing elements in reciprocating compressors may result in excessive wear of the cylinder liner sleeves.

This disadvantage has been partially overcome by means of the addition of appropriate lubricating fillers between the sliding surfaces.

PBS is currently used as an alternative in the production of sealing elements since said polymer is relatively resistant to elevated temperatures and is capable of forming sulfides with a lubricating action.

These properties make it particularly suitable for dry sliding applications.

PBS does, however, exhibit the disadvantage of not having elevated thermal conductivity, which restricts the use thereof under operating conditions with elevated temperatures.

In order to overcome this disadvantage and to increase mechanical strength, PBS is used in combination with additives and fillers which allow the dissipation of excess heat.

It has in fact been found that, in reciprocating compressors, polymer-based sealing elements essentially operate due to the transfer layer present on the metal surface of the cylinder liner sleeve. This phenomenon results in low friction polymer-polymer sliding. When said transfer layer is absent, high friction metal-polymer contact occurs, resulting in premature wear of the sealing ring.

Thus, in the absence of force-feed lubrication, the performance of conventionally used sealing elements is substantially determined by the presence or otherwise of said transfer layer.

It is thus obvious that it would be worthwhile to be able to make use of sealing elements made from materials with a low wear rate which are capable of continuously forming a transfer film which reduces the friction force between the sliding parts. One such proposal is shown in GB-A-2 013 793 in which a plurality of lubricant filled frangible capsules is supported by a seal ; body material.

One of the general objects of the present invention is to overcome or to reduce substantially the disadvantages of the prior art which result in premature wear of sealing elements.

Another object of the present invention is to provide a non-metal-based material for the production of sealing elements in reciprocating compressors which has a low wear rate and does not require force-feed lubrication.

A further object of the invention is to provide a self- lubricating plastics material for sealing elements in reciprocating compressors, which material has good wear resistance properties, even under conditions with elevated pressure loads and elevated temperatures.

Another object is to provide a plastics material for the production of sealing elements which are substantially not subject to permanent deformation under sliding conditions without lubricant.

In the light of said and other objects which will emerge more clearly below, a first aspect of the present invention provides a self-lubricating material which is particularly suitable for sealing elements and comprises a wear-resistant polymer matrix in which are dispersed microcapsules containing a lubricating agent characterised by in that said polymer matrix comprises a resin selected from among polybutadiene-styrene (PBS), polytetrafluoroethylene (,PTFE) and mixtures thereof.

According to a preferred embodiment of the invention, said polymer matrix comprises one or more polyketones, advantageously aromatic polyketones, it being preferred, among said polyketones, to use polyetherether ketone (PEEK).

The polymer matrix of the material of the invention may also contain further substances capable of imparting greater resistance to frictional wear.

For example, the polymer matrix may comprise additives and/or fillers which assume the function of increasing the thermal conductivity of the material of the invention in order efficiently to dissipate the heat generated by any friction between the sliding parts.

The material of the invention may advantageously also contain fibres with elevated mechanical strength and elevated resistance to deformation and wear.

According to one embodiment, said polymer matrix furthermore provides the incorporation of a hard phase and/or a transfer film in order to reduce friction between the sliding partners.

The essential feature of the material of the invention is the presence of lubricating microcapsules dispersed within said polymer matrix.

For the purposes of the present invention, lubricating microparticles are intended to mean encapsulated lubricating particles and multiparticles, homogeneous fluids or encapsulated lubricating multilayer materials and in general lubricating agents incorporated in microcapsules.

Suitable lubricating agents are lubricating oils, such as for example organic, natural or synthetic oils.

Particularly suitable oils are lubricating oils which are low in acidity and resistant to elevated operating temperatures.

According to a preferred embodiment, the lubricating oil incorporated into said microcapsules exhibits viscosity values within the range between 20 and 250 cSt, measured at a temperature of approx. 40°C.

The microcapsules used for the purposes of the present invention may be spherical, symmetrical or irregularly shaped.

According to one embodiment, the capsules have an average diameter within the range between 5 and 500 microns.

Advantageously, said microcapsules comprise a shell of wax or of a polymer material, preferably polyoxymethylene urea, which is abbreviated as PMU.

Apart from the lubricating agent, the microcapsules may contain selected additives depending upon the intended application. In particular for use under elevated pressure conditions, microelements such as zinc, boron and mixtures thereof may be incorporated.

Advantageously, the lubricating microcapsules are uniformly dispersed within the polymer matrix in such a manner as to achieve contents by weight of between 2 and 30 wt.%.

The capsules containing the lubricating fluid may be produced using various microencapsulation technologies, such as dry spraying, prilling, coacervation, with soft alginate beads and in situ polymerisation.

The various lubricant encapsulation technologies are used depending upon the required dimensions of the lubricating particles and upon the ultimate use of the plastics material of the invention.

Using the dry spraying process, for example, it is possible to encapsulate the oils in capsules of dimensions as small as 5-30 microns.

In the prilling process, which is usually used to produce capsules of dimensions between 1 and 100 microns, the lubricant to be encapsulated is first of all introduced into a molten wax or other polymer matrix, then sprayed into droplets and cooled to solidify them. The resultant microcapsules act as a shell for the lubricant contents. Microcapsules produced by prilling release the lubricant under pressure or, if desired, by selecting polymers with an appropriate melting point, after exposure to a predetermined temperature.

Using the coacervation method, the lubricant may also be enclosed in capsules of a diameter within the range between 25 and approx. 300 microns.

In simple coacervation, the walls of the capsules are typically made from gelatine, polyvinyl alcohol, methylcellulose, polyvinylpyrrolidone and other polymers.

In complex coacervation, the capsule walls are produced using systems based on gelatine-acacia copolymers.

Among the various technologies which are available, in situ polymerisation is preferred for the production of the microcapsules because it makes it possible to produce a strong polymer shell, preferably of ureaformaldehyde copolymer (PMU), around the drop of lubricating liquid. Encapsulation in a PMU shell is typically an emulsion process, in which an emulsion of the material to be encapsulated is prepared in an aqueous solution.

By way of example, microcapsules containing lubricant produced using the method described in US patent 5,112,541 may be used for the purposes of the present invention.

Once produced, the microcapsules are incorporated into the polymer matrix, preferably by moulding, for example by means or compression or injection moulding.

Temperatures within the range between 260 and 350°C are conveniently used during moulding.

Compression moulding is advantageously performed within a closed mould in order to permit uniform heating and pressurisation of the composite material.

According to one embodiment, the mould is pressurised when cold for example to 1.5-2.5 t in order to expel the air from the mould. The mould is placed in a preheated press. The temperature of the press conveniently depends upon the melting point of the polymer material used. Approx. 80-90% of the selected pressure temperature can be achieved before application of the load. The load is thus generally applied to values of between 250 and 1500 kg with time and pressure increments for a total period of approx. 10-15 minutes. The final load is maintained while the mould is allowed to cool to ambient temperature.

According to another embodiment, the injection moulding method is used, with low processing temperatures or short heating and cooling cycles.

It has been found that using the self-lubricating material of the invention as the base constituent for sealing elements minimises the transfer layer required for self-lubrication by providing, due to the microcapsules, a replenishable source of lubricant. Furthermore, its use surprisingly reduces the wear rate of the sealing element, so minimising the risk of surface wear of the sliding partner and increasing the service life of the compressor.

According to another aspect, the present invention provides a sealing element or packing comprising the self-lubricating material described above.

Advantageously, said sealing element is a sealing ring for a reciprocating compressor piston.

According to another aspect, the present invention provides the use of a self-lubricating material of the type described above according to the attached claims.

According to a further aspect, the present invention provides a method for reducing the friction or wear of elements which are adjacent to or in contact with one another when in motion, in which method at least one portion of the adjacent surfaces of said elements comprises a self-lubricating material of the type described above.

According to a preferred embodiment, the invention provides the use of said self-lubricating material as a sealing element for a reciprocating compressor in order to reduce wear and/or appreciably to improve service life, in particular for dry sliding applications.

Further features and advantages associated with the self-lubricating plastics material according to the present invention will emerge more clearly from the following description, which is provided merely by way of non-limiting example, with reference to the attached diagrams, in which:
Figure 1 is a schematic diagram of the mode of operation of a conventional sealing element for a piston in a reciprocating compressor;
Figure 2 is a schematic diagram of a side-section of a sealing element of the invention and the sliding partner;
Figure 3 shows bar charts comparing the coefficients of friction and wear for a known wear-resistant material and a material according to one embodiment of the invention;
Figure 4 shows bar charts comparing coefficients of wear for a known PEEK-based wear-resistant material and a PEEK-based material incorporating the self-lubricating microcapsules according to one embodiment of the invention.

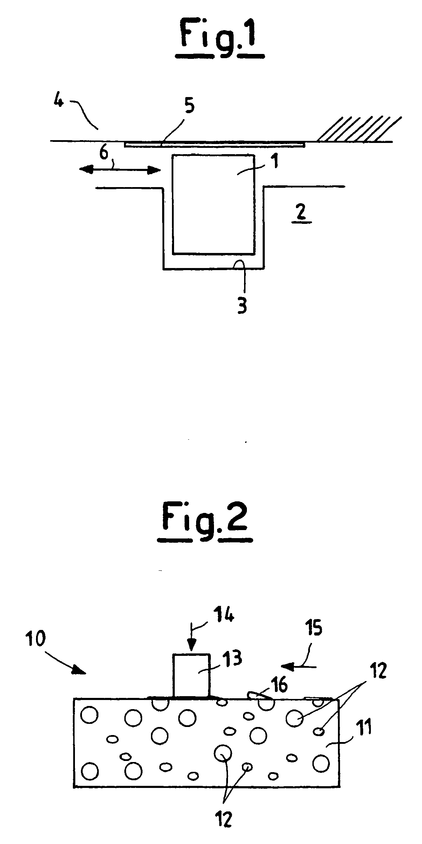

With reference to Figure 1, a conventional sealing ring 1 made from PEEK resin is shown accommodated in a lateral seat 3 of a piston 2 in a reciprocating compressor (not shown). The piston 2 moves with a reciprocating motion, sliding along an internal sleeve 4 of a cylinder (not shown). The sliding motion between the two sliding partners takes place due to the sliding layer 5 deposited on the metal surface of the sleeve 4. This layer or film allows a reciprocating motion with a low coefficient of friction. Absence of the transfer layer 5 results in higher friction due to metal-resin contact.

With reference to Figure 2, reference numeral 10 indicates a cross-section of an embodiment of a sealing element made from self-lubricating material of the invention.

The sealing element 10 comprises a polymer matrix 11 of PEEK, in which are uniformly dispersed microcapsules 12 filled with lubricating oil. Figure 2 furthermore schematically illustrates the sliding partner 13 of the sealing element 10, which, under the pressure load indicated with reference numeral 14, slides along the sliding surface in the direction indicated by the arrow identified with the reference numeral 15. The microcapsules 12 filled with fluid lubricant are transformed into ruptured microcapsules 16 by the shear force. The release of fluid from the ruptured microcapsules 16, which may also be effected thermally, lubricates the sliding surfaces, reducing the coefficient of friction and wear.

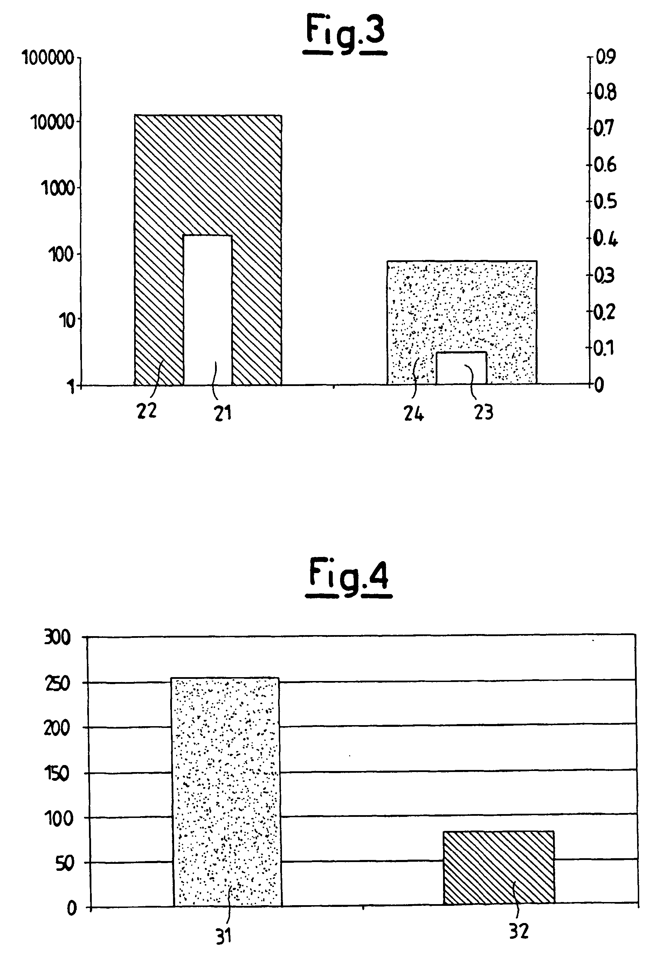

Figure 3 shows four bar charts (21-24) which summarise the results of comparative testing of wear stated in terms of a wear coefficient as factor K (in³min/ft/lb/hr)x10⁹; (shaded column 22 and dotted column 24) and of coefficient of friction, stated in µ (clear columns 21 and 23).

Columns 21-24 show the comparative behaviour data arising from sliding of:
1) a polymer designated Ultem 1000 (columns 21 and 22), a standard product of General Electric and
2) a polymer material based on Ultem 1000 with microcapsules incorporated at a rate of 10 wt.%, produced according to one embodiment of the method of the invention (columns 23 and 24),
against tempered steel.

The microcapsules incorporated into the Ultem 1000 resin contain a low viscosity oil according to one embodiment of the invention.

The wear tests whose results are summarised in the bar charts were performed under conditions which provide a sliding speed of 300 ft/min (1.524 m/s), a pressure load of 200 psi (13.8 bar) and a test duration of 20 hours "run-in" and 80 hours "steady state".

On the basis of the results from the tests performed, it is clear that the wear rate against steel of the plastic Ultem 1000 incorporating microcapsules produced according to an embodiment of the method of the invention, is reduced by a good three orders of magnitude, while friction is reduced by one order of magnitude, relative to the prior art resin Ultem 1000.

With reference of Figure 4, bar charts (31 and 32) are shown which summarise the results, stated in terms of the factor K (in³min/ft/lb/hr)x10⁹, of friction testing carried out on:
1) a sealing element of PEEK (Victrex PEEK 450G from GE Corporation, dotted column 31)
2) a second sealing element of PEEK with incorporated microcapsules of Gargoyl lubricant in a quantity equivalent to approx. 10% of the weight thereof (hatched column 32) according to an embodiment of the invention,
both against tempered steel.

The results summarised in the bar charts 31 and 32 show, for the sealing element according to the present invention, a significant reduction in the coefficient of friction of approx. one order of magnitude.

## Claims

1. A self-lubricating plastics material for sealing elements, comprising a wear-resistant polymer matrix (11) in which are dispersed microcapsules (12) containing a lubricating agent **characterised in that** said polymer matrix comprises a resin selected from among polybutadiene-styrene (PBS), polytetrafluoroethylene (,PTFE) and mixtures thereof.

2. A material according to claim 1, **characterised in that** said polymer matrix comprises a polyketone.

3. A material according to claim 2, **characterised in that** said polyketone is an aromatic polyketone.

4. A material according to claim 3, **characterised in that** said aromatic polyketone is polyetherether ketone (PEEK).

5. A material according to any preceding claim, **characterised in that** said microcapsules comprise a shell of pol,yoxymethylene urea (PMU).

6. A material according to any preceding claim, **characterised in that** said microcapsules have an average diameter of between 5 and 500 U.

7. A material according to any preceding claims, **characterised in that** said microcapsules are dispersed in said polymer matrix in a ratio by weight of between 2 and 30 wt.%.

8. A material according to any preceding claim, **characterised in that** said lubricant incorporated in the microcapsules is an oil which is low in acidity.

9. A material according to any preceding claim, **characterised in that** said lubricant is a fluid lubricant which has a viscosity within the range between 20 and 250 cSt_.

## Patentansprüche

1. Selbstschmierendes Kunststoffmaterial für Dichtungselemente mit einer verschleißfesten Polymermatrix (11), in die Mikrokapseln (12) eingelagert sind, die ein Schmiermittel enthalten, **dadurch gekennzeichnet, dass** die Polymermatrix ein Harz enthält, das ausgewählt ist aus Polybutadien-Styren (PBS), Polytetrafluorethylen (PTFE) und deren Mischungen.

2. Material nach Anspruch 1, **dadurch gekennzeichnet, dass** die Polymermatrix ein Polyketon enthält.

3. Material nach Anspruch 2, **dadurch gekennzeichnet, dass** das Polyketon ein aromatisches Polyketon ist.

4. Material nach Anspruch 3, **dadurch gekennzeichnet, dass** das aromatische Polyketon ein Polyetherketon (PEEK) ist.

5. Material nach einem der vorausgehenden Ansprüche, **dadurch gekennzeichnet, dass** die Mikrokapseln eine Hülle aus Polyoximethylen-Harnstoff (PMU) aufweisen.

6. Material nach einem der vorausgehenden Ansprüche, **dadurch gekennzeichnet, dass** die Mikrokapseln einen durchschnittlichen Durchmesser zwischen 5 und 500 µ aufweisen.

7. Material nach einem der vorausgehenden Ansprüche, **dadurch gekennzeichnet, dass** die Mikrokapseln in der Polymatrix in einem Gewichtsverhältnis zwischen 2 und 20 Gew.% verteilt sind.

8. Material nach einem der vorausgehenden Ansprüche, **dadurch gekennzeichnet, dass** das in den Mikrokapseln enthaltene Schmiermittel ein Öl ist, das einen geringen Säuregrad hat.

9. Material nach einem der vorausgehenden Ansprüche, **dadurch gekennzeichnet, dass** das Schmiermittel ein fluides Schmiermittel ist, das eine viskosität in dem Bereich zwischen 20 und 250 cST aufweist.

## Revendications

1. Matière plastique autolubrifiante pour éléments d'étanchéité, comprenant une matrice polymère résistant à l'usure (11) dans laquelle sont dispersées des microcapsules (12) contenant un agent lubrifiant **caractérisée en ce que** ladite matrice polymère comprend une résine sélectionnée parmi le polybutadiène-styrène (PBS), le polytétrafluoroéthylène (PTFE) et leurs mélanges.

2. Matière selon la revendication 1, **caractérisée en ce que** ladite matrice polymère comporte une polycétone.

3. Matière selon la revendication 2, **caractérisée en ce que** ladite polycétone est une polycétone aromatique.

4. Matière selon la revendication 3, **caractérisée en ce que** ladite polycétone aromatique est une polyétheréther-cétone (PEEK).

5. Matière selon l'une quelconque des revendications précédentes, **caractérisée en ce que** lesdites microcapsules comprennent une enveloppe de polyoxyméthylène urée (PMU).

6. Matière selon l'une quelconque des revendications précédentes, **caractérisée en ce que** lesdites microcapsules présentent un diamètre moyen compris entre de 5 et 500 µm.

7. Matière selon l'une quelconque des revendications précédentes, **caractérisée en ce que** lesdites microcapsules sont dispersées dans ladite matrice polymère dans un rapport en poids compris entre 2 et 30 % en poids.

8. Matière selon l'une quelconque des revendications précédentes, **caractérisée en ce** ledit lubrifiant incorporé dans les microcapsules est une huile qui présente une faible acidité.

9. Matière selon l'une quelconque des revendications précédentes, **caractérisée en ce** ledit lubrifiant est un lubrifiant fluide qui présente une viscosité dans la plage comprise entre 20 et 250 mm²/s (cSt).
